# EUROPEAN PATENT APPLICATION

(11) **EP 3 090 721 A1**
(43) Date of publication of application: **09.11.2016**
(21) Application number: 16168523.5
(22) Date of filing: 05.05.2016
(51) Int. Cl.: A61J 1/20, A61J 3/00, B65B 3/00

(54) **SYSTEM FOR THE PREPARATION AND DOSAGE OF CHEMOTHERAPY DRUGS**

(30) Priority: 05.05.2015 IT UB20150371
(71) Applicant: MASMEC S.p.A., 70026 Modugno (IT)
(72) Inventor: LARIZZA, Piero, 70026 Modugno (IT); VINCI, Michele, 70026 Modugno (IT)
(74) Representative: Bongiovanni, Simone

(57) **Abstract**

Automated system for the preparation and dosage of chemotherapy drugs wherein a main system comprises a robotic manipulator arm (7) housed inside a safety cell (3) and provided with a mobile gripping element (8) moving according to a plurality of axes (for example six axes) within the safety cell (3).

An auxiliary system (20) is provided comprising at least one needle supporting element (21) housed in the safety cell (3) and provided with a fitting (22) on which a needle (24) can be mounted by means of the robotic manipulator (7) and a hydraulic circuit (30) provided with a dosing device (32) and adapted to communicate with the needle (24) and with an auxiliary bag (33) containing a saline solution. The hydraulic circuit (30) is available alternatively in a plurality of configurations comprising: a first configuration wherein the needle (24) communicates with an inlet (32A) of the dosing device (32) to provide suction of a preset quantity of the saline solution contained in a main bag (10) which is carried by the robot (7); a second configuration wherein the inlet (32A) of the dosing device (32) communicates with a fluid discharge outlet (34) to discharge the saline solution previously sucked in by the dosing device (32); a third configuration wherein the inlet (32A) of the dosing device (32) communicates with the auxiliary bag (33) to suck a preset quantity of saline solution; and a fourth configuration wherein the inlet (32A) of the dosing device (32) communicates with the needle (24) to discharge the saline solution previously sucked into the dosing device (32) towards said needle (24) which is coupled and allow inflow of the saline solution into a main bag and/or a vial carried by the robot (7) and coupled with the needle (24).

## Description

The present invention concerns a system for the preparation and dosage of chemotherapy drugs.

As is known, due to their high toxicity, chemotherapy drugs have to be handled with particular care in order to prevent any dispersion of the drug in the environment and any accidental contact of the drug with the healthcare personnel.

For said purpose automated systems have been provided for the preparation and dosage of chemotherapy drugs in which the drug treatment operations are performed in a robotized manner and in a sealed environment.

An automated system of known type generally comprises a robotic manipulator arm housed inside a safety cell and provided with a mobile gripping element moving according to six axes within the safety cell. The gripping element is configured to withdraw, move and operate a syringe used to draw, by means of suction, a fluid drug from a vial and subsequently inject the fluid drug contained in the syringe into a main bag containing a saline solution.

The object of the present invention is to widen the functions of the systems of known type, making it possible to carry out operations that cannot be performed with the devices currently on the market.

In particular the applicant has noted that the fluid contained in the bags has a volume which is often superior to the scheduled rated volume; the need is therefore felt to reduce, in an automated manner, the quantity of fluid in a bag using the same system as the one used for the preparation and dosage of chemotherapy drugs.

In other operating conditions the opposite need is felt, i.e. to increase the volume of fluid contained in a bag or to feed saline solution into a vial, for example a vial containing a drug in powder form which has to be reconstituted or diluted.

The system of the present invention meets said needs since it concerns an automated system for the preparation and dosage of chemotherapy drugs in which a main system comprises: a robotic manipulator arm housed inside a safety cell and provided with a mobile gripping element moving according to a plurality of axes within the safety cell; said gripping element being configured to withdraw, move and operate a syringe used to draw, by means of suction, a fluid drug from a vial and subsequently inject the fluid drug contained in the syringe into a main bag containing a saline solution, **characterized in that it comprises** an auxiliary system comprising: at least one needle supporting element housed in said safety cell and provided with a fitting on which a needle can be mounted by means of said robotic manipulator arm; a hydraulic circuit provided with a dosing device and adapted to communicate with said needle and with an auxiliary bag containing a saline solution; said hydraulic circuit being available alternatively in a plurality of configurations comprising: a first configuration wherein said needle communicates with an inlet of said dosing device to provide suction of a preset quantity of the saline solution contained in the main bag which is carried by the gripping element of the robot and arranged so that the latter couples with the needle which penetrates into the main bag; a second configuration wherein the inlet of the dosing device communicates with a fluid discharge outlet to discharge the saline solution previously sucked in by the dosing device towards said fluid discharge outlet; a third configuration wherein the inlet of the dosing device communicates with said auxiliary bag to suck a preset quantity of saline solution present in said auxiliary bag into said dosing device; and a fourth configuration wherein the inlet of said dosing device communicates with said needle to discharge the saline solution previously sucked into said dosing device towards said needle and allow inflow of the saline solution into a main bag and/or a vial carried by the robot so that the latter couples with the needle.

The invention will now be illustrated with reference to the accompanying drawings which show a preferred non-limiting embodiment in which:
**figure 1** **illustrates, in a front view,** an automated system for the preparation and dosage of chemotherapy drugs produced according to the teachings of the present invention;
figure 2 illustrates, in a perspective view, the system of figure 1;
figure 3 illustrates in a perspective view and on an enlarged scale a detail of the system of figure 1; and
figures 4-A, 4-B, 4-C and 4-D illustrate operations of the system of the present invention.

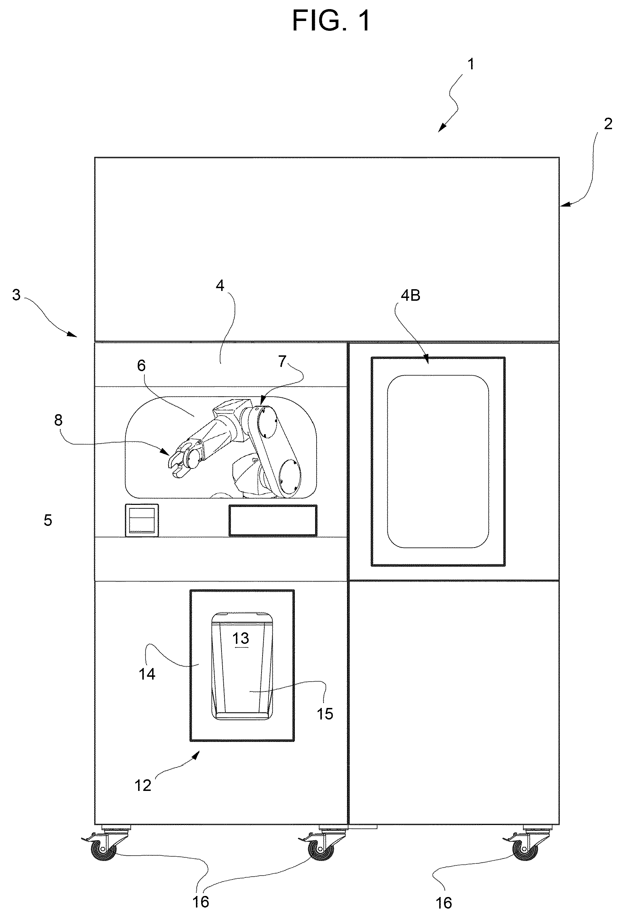

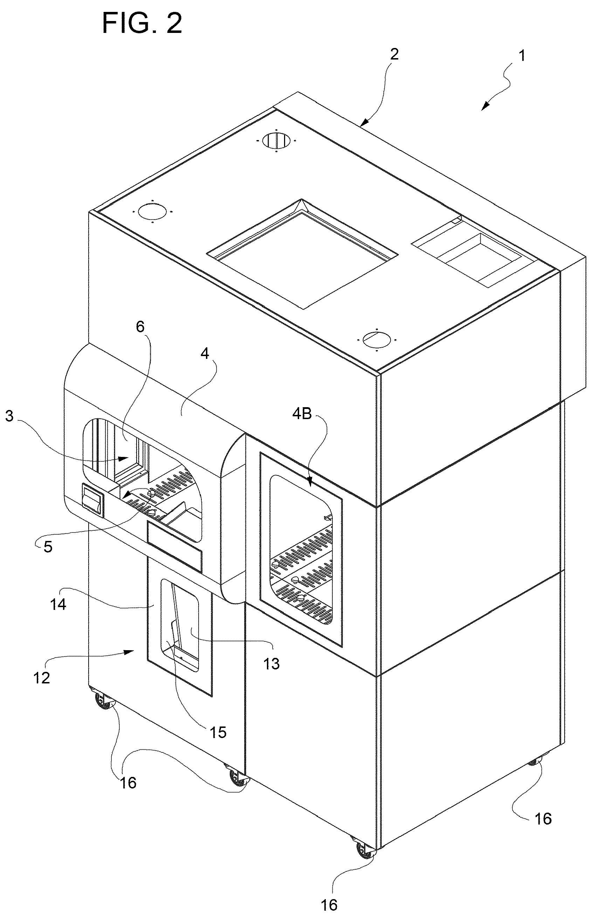

**In** **figures 1** **and** **2** the number 1 indicates, as a whole, an automated system for the preparation and dosage of chemotherapy drugs.

The system 1 is housed in a parallelepipedal metal cabinet 2 defining, inside, a safety cell 3 accessible from the outside via an opening provided with a door 4 having a front opening 5 closed by a transparent element 6.

The safety cell 3 houses a robotic manipulator arm 7 (of known type and therefore not illustrated in detail - figure 1) provided with a mobile gripping element 8 moving according to a plurality of axes (in the example six axes) inside the safety cell 3. The gripping system 8 is electrically controlled and provided with force control and is able to manage different geometries.

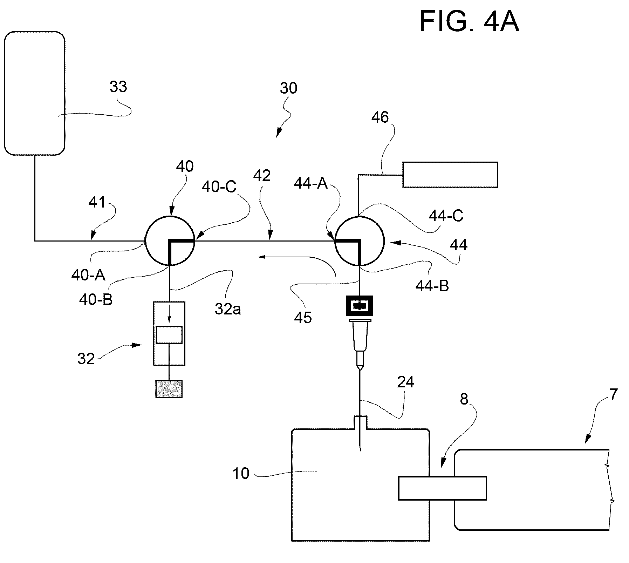

The robotic manipulator arm 7 is adapted to move vials 9 (figures **4A-4D****)** containing chemotherapy drugs, bags of saline solution 10 inside which a preset quantity of chemotherapy drug must be introduced and sterile syringes 11 used to suck the chemotherapy drug from the vial 9 and subsequently inject a preset quantity of chemotherapy drug into the bag 10. Appropriately the robot 7 is provided with means adapted to operate the plunger of the syringe 11 according to a reversible path for suction of the fluid and expulsion of the fluid sucked in. The operations performed by the robot 7 are of known type and therefore will not be further detailed.

When the door 4 is arranged in the closed position the safety cell 3 is completely separated from the outside of the casing and treatment of the vials 9 can be carried out in total safety. A HEPA suction and filtering system is also provided. A second door 4B is also provided, used for the supply and deposit of drugs and consumables.

The system 1 is provided with a discharge section 12 in which a container for hospital waste 13 (of known type) is arranged adapted to house the syringes 10, the vials 9 and the needles which have been used for handling the chemotherapy drugs. The container 13 is accessible via a door 14 provided with a transparent central section 15.

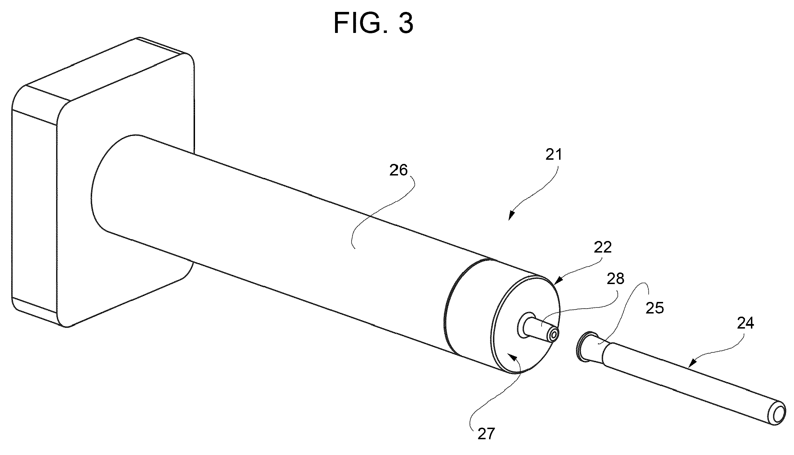

Appropriately the metal cabinet 2 is provided with castors 16 for movement. **According to the present invention** an auxiliary system 20 **is provided** housed in the metal cabinet 2 and comprising at least one needle supporting element 21 housed in the safety cell 3 and provided with a fitting 22 on which a needle 24 provided with a frustoconical needle support 25 made of plastic can be mounted, by means of the robotic manipulator arm 7. Appropriately the needle supporting element 21 is arranged at the end of a cylindrical body 26 provided with a flat end part 27 and is formed of a tubular frustoconical body 28 coaxial with the cylindrical body 26 and provided with a central hole for passage of the fluid. The needle support 25 is adapted to be mounted on the frustoconical body 28, coupling with it by press-fitting (figure 3).

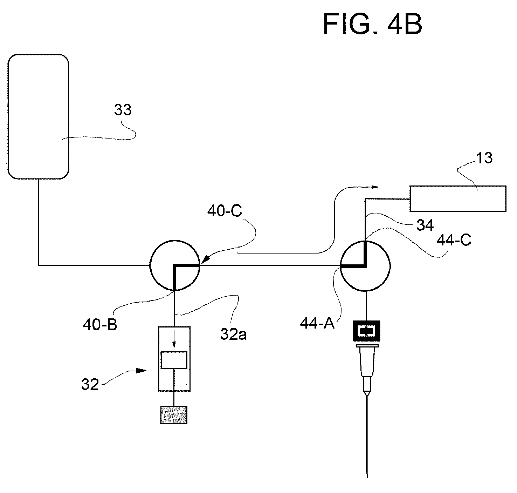

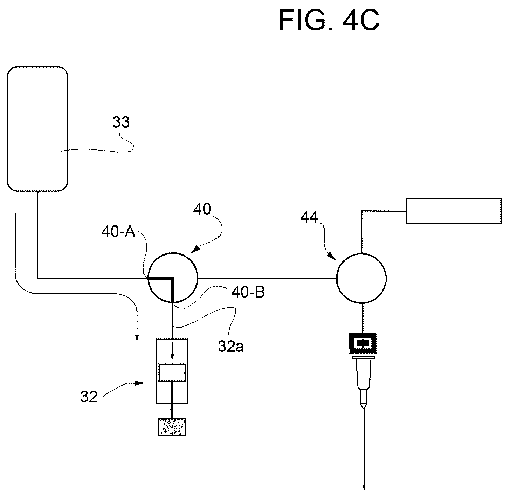

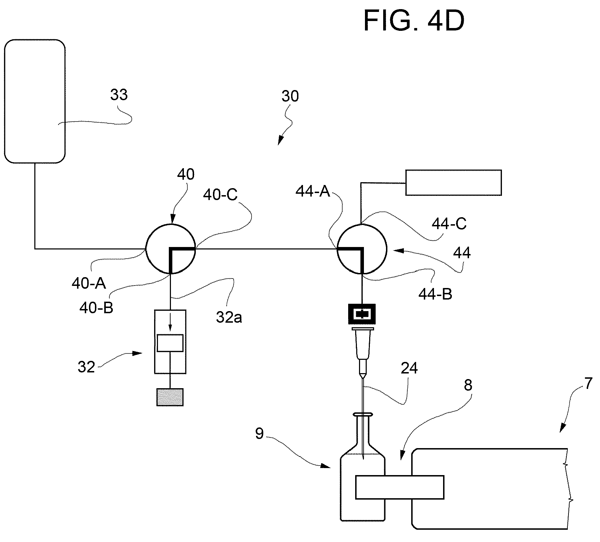

The auxiliary system comprises a hydraulic circuit 30 provided with a dosing device 32 (figure 4) and adapted to communicate - according to the methods that will be clarified below - with the needle 24 and with an auxiliary bag 33 containing a saline solution. Appropriately, the auxiliary bag 33 is housed in a seat of the metal cabinet 2 accessible from the outside by means of a door (not illustrated) arranged on one side of the door 4.

According to the present invention the hydraulic circuit 30 is available alternatively in a plurality of configurations comprising a first configuration (figure 4A) in which the needle 24 communicates with an inlet 32a of the dosing device 32 to suck a preset quantity of the saline solution contained in the main bag 10 which is carried by the gripping element of the robot 7 and arranged so that the latter couples with the needle 24 which penetrates inside the bag 10. The operations associated with the first configuration allow a preset quantity of solution to be extracted from the main bag 10, reducing the volume of solution present in the main bag 10.

The robot 7 can be associated with an electronic balance of known type (not illustrated) appropriately used for weighing the bag 10 before extraction of the solution and after extraction of the solution. Said information can be used to determine - in greater detail - the quantity of solution extracted from the bag 10.

The hydraulic circuit is further available in a second configuration wherein the inlet 32A of the dosing device 32 communicates with a fluid discharge outlet 34 to discharge the saline solution previously sucked in by the dosing device 32 towards the fluid discharge outlet 34 and deposit it in the container 13 for hospital waste. The operations associated with the second configuration allow safe disposal of the fluid which has been extracted from the main bag 10 towards the container 13.

The operations associated with the first and second configuration allow the liquid present in the main bag to be reduced by a preset quantity, discharging said excess liquid into the container 13.

The hydraulic circuit 30 is available in a third configuration (figure 4C) in which the inlet 32A of the dosing device 32 communicates with the auxiliary bag 33 to suck a preset quantity of saline solution into said dosing device 32.

Following implementation of the third arrangement, the hydraulic circuit 30 is available in a fourth configuration wherein the inlet 32A of the dosing device 32 communicates with the needle 24 to discharge the saline solution previously sucked into the dosing device 32 towards the needle 24 and allow inflow of the saline solution into a main bag 10 and/or a vial 9 (in figure 4D a vial is illustrated) carried by the robot 7 so that the latter couples with the needle 24. The operations associated with the third and fourth step allow the saline solution to be withdrawn from the bag 33 and transferred to a main bag 10 and/or a vial 9, for example to reconstruct a drug or dilute a drug.

The electronic balance (not illustrated) can be appropriately used to weigh the bag 10/the vial 9 before introduction of the fluid and after introduction of the fluid. Said information can be used to determine - in greater detail - the quantity of fluid introduced into the bag 10/into the vial 9.

With reference to figure 4, the hydraulic circuit 30 comprises a first three-way valve 40 with two positions having a first way 40-A communicating with the auxiliary bag 33 by means of a duct 41, a second way 40-B communicating with the inlet 32 of the dosing device 32 and a third way 40-C communicating-through a duct 42 - with a first way 44-A of a second three-way valve with two positions 44. The second three-way valve with two positions 44 has a second way 44-B communicating with the needle 24 through a duct 45 and a third way 44-C communicating with said fluid discharge outlet through a duct 46 which leads out above the container 13.

In the first configuration the first valve 40 is arranged in a first position A1 in which the third way 40-C communicates with the second way 40-B and the second valve 44 is arranged in a first position A2 in which the first way 44-A communicates with the second way 44-B to provide a connection between the needle and the dosing device 32 which is operated to allow suction of the fluid contained in the main bag into the dosing device 32. The stroke of a plunger of the dosing device 32 in a first direction is regulated to suck a preset quantity of fluid (see the arrow in figure 4A) from the main bag 10.

In the second configuration the first valve 40 is kept in the first position A1 in which the third way 40-C communicates with the second way 40-B and said second valve 44 is arranged in a second position B2 in which said first way 44-A communicates with said third way 44-C to provide a connection between said dosing device 32 and said discharge and allow conveying of the fluid previously sucked into the dosing device towards said fluid discharge outlet. The stroke of the plunger of the dosing device 32 in a second direction is regulated to expel all the fluid previously sucked in (see the arrow in figure 4A).

In the third configuration said first valve 40 is arranged in a second position A2 in which the first way 40-A communicates with the second way 40-B to allow suction of fluid from the auxiliary bag 33 to said dosing device in which a preset quantity of fluid taken from the auxiliary bag is accumulated. The stroke of the plunger of the dosing device 32 in the first direction is regulated to suck in a preset quantity of fluid (see the arrow in figure 4C) from the auxiliary bag 33.

In the fourth configuration the first valve 40 is re-set to the first position A1 in which the second way 40-B communicates with the third way 40-C and the second valve 44 is arranged in the first position B1 in which the first way 44-A communicates with the second way 44-B to allow the fluid discharged from the dosing device 32 to proceed towards the needle 24. The stroke of the plunger of the dosing device 32 in a second direction is regulated to expel all the fluid previously sucked in (see the arrow in figure 4D) and transfer it into the vial 9 or into the main bag 10.

In this way the system according to the present invention allows the quantity of fluid present in a bag to be reduced since - in many cases - the fluid contained in the bags has a volume which is superior to the scheduled rated volume; said reduction operations are performed in an automated manner using the same system as the one used for the preparation and dosage of chemotherapy drugs.

The system of the present invention further allows increase of the volume of fluid contained in a bag and/or supply of saline solution to a vial, for example a vial containing a drug in powder form which has to be diluted or reconstituted.

The operations performed by the auxiliary system require replacement only of the needle 24 and are performed without using further sterile syringes. A saving is thus obtained in terms of costs of the disposable items.

## Claims

1. Automated system for the preparation and dosage of chemotherapy drugs wherein a main system comprises:
a robotic manipulator arm (7) housed inside a safety cell (3) and provided with a mobile gripping element (8) moving according to a plurality of axes within the safety cell (3);
said gripping element (3) being configured to withdraw, move and operate a syringe (11) used to draw, by means of suction, a fluid drug from a vial (9) and subsequently inject the fluid drug contained in the syringe (11) into a main bag (10) containing a saline solution,
**characterised in that it comprises** an auxiliary system (20) comprising:
at least one needle supporting element (21) housed in said safety cell (3) and provided with a fitting (22) on which a needle (24) can be mounted by means of said robotic manipulator (7);
a hydraulic circuit (30) provided with a dosing device (32) and adapted to communicate with said needle (24) and with an auxiliary bag (33) containing a saline solution;
said hydraulic circuit (30) being available alternatively in a plurality of configurations comprising:
a first configuration wherein said needle (24) communicates with an inlet (32A) of said dosing device (32) to provide suction of a preset quantity of the saline solution contained in the main bag (10) which is carried by the gripping element of the robot (7) and arranged so that the latter couples with the needle (24) which penetrates into the main bag (10);
a second configuration wherein the inlet (32A) of the dosing device (32) communicates with a fluid discharge outlet (34) to discharge the saline solution previously sucked in by the dosing device (32) towards said fluid discharge outlet (34);
a third configuration wherein the inlet (32A) of the dosing device (32) communicates with said auxiliary bag (33) to suck a preset quantity of saline solution present in said auxiliary bag (33) into said dosing device (32); and
a fourth configuration wherein the inlet (32A) of said dosing device (32) communicates with said needle (24) to discharge the saline solution previously sucked into said dosing device (32) towards said needle (24) and allow inflow of the saline solution into a main bag and/or a vial carried by the robot (7) so that the latter couples with the needle (24).

2. System according to claim 1, wherein said hydraulic system comprises:
a first three-way valve with two positions (40) having a first way (40-A) communicating with said auxiliary bag (33), a second way (40-B) communicating with said inlet (32-A) of said dosing device (32) and a third way (40-C) communicating with a first way (44-A) of a second three-way valve (44) with two positions;
said second three-way valve (44) with two positions having a second way (44-B) communicating with said needle (24) and a third way (44-C) communicating with said fluid discharge outlet (46);
in said first configuration said first valve (40) being arranged in a first position A1 wherein the third way (40-C) communicates with the second way (40-B) and said second valve (44) is arranged in a first position A2 wherein said first way (44-A) communicates with said second way (44-B) to provide a connection between said needle (24) and said dosing device (32) to allow controlled suction of the fluid contained in said main bag (10) inside said dosing device (32);
in said second configuration said first valve (40) being maintained in said first position A1 wherein the third way (40-C) communicates with the second way (40-B) and said second valve (44) is arranged in a second position B2 wherein said first way (44-A) communicates with said third way (44-C) to provide a connection between said dosing device (32) and said fluid discharge outlet and allow the fluid previously sucked into said dosing device to be conveyed towards said fluid discharge outlet;
in said third configuration said first valve (40) being arranged in a second position A2 wherein the first way (40-A) communicates with the second way (40-B) to allow suction of fluid from said auxiliary bag (33) to said dosing device (32) wherein a preset quantity of fluid taken from said auxiliary bag (33) is accumulated;
in said fourth configuration said first valve (40) being re-set to the first position A1 wherein the second way (40-B) communicates with the third way (40-C) and said second valve (44) is arranged in said first position B1 wherein said first way (44-A) communicates with the second way (44-B) to allow the fluid discharged from the dosing device (32) to proceed towards said needle.

3. System according to claim 1 or 2, wherein the needle supporting element (21) is arranged at the end of an elongated body (26) provided with a frustoconical end body (28) provided with a central hole for passage of the fluid; said needle (24) is provided with a needle support (25) adapted to be mounted by said robot (7) on the frustoconical body (28) coupling with the latter by press-fitting.
